# FASCICULE DE BREVET EUROPEEN

(11) **EP 0 431 031 B1**
(45) Date de publication et mention de la délivrance du brevet: **14.07.1993**
(21) Numéro de dépôt: 89909777.8
(22) Date de dépôt: 18.08.1989
(51) Int. Cl.: A21D 13/00, A21D 8/00

(54) **PROCEDE DE FABRICATION DE BARQUETTES INGERABLES POUR LA PRESENTATION D'ALIMENTS ET BARQUETTES OBTENUES**
VERFAHREN ZUR BEREITUNG VON ESSBAREN SCHÄLCHEN ZUR PRÄSENTATION VON LEBENSMITTELN UND AUF DIESE WEISE ERHALTENE SCHÄLCHEN
METHOD FOR PRODUCING INGESTIBLE BOAT-SHAPED PASTRIES FOR THE PRESENTATION OF FOOD, AND BOAT-SHAPED PASTRIES THUS OBTAINED

(30) Priorité: 24.08.1988 FR 8811181
(43) Date de publication de la demande: 12.06.1991
(73) Titulaire: CREAPAIN, F-18000 Bourges (FR)
(72) Inventeur: Camus, Jean-Yves, F-44850 Nantes (FR); Guillemot, André, F-44360 Vigneux de Bretagne (FR); Raimbert, Claude, F-37110 Chateau Renault (FR)
(74) Mandataire: Dawidowicz, Armand
(86) Numéro de dépôt international: FR8900424
(87) Numéro de publication internationale: WO9001877

(56) Documents cités:
- WO-A-83/01726
- GB-A- 109 990
- US-A- 3 410 691
- US-A- 3 908 022
- US-A- 4 065 581
- A.H. Rose et al. he ÿeasts", vol. 3, 1970, Academic Press (London, GB), pages 354-363

## Description

La présente invention concerne des barquettes ingérables utilisables plus particulièrement dans le domaine de la restauration dite rapide. Dans la restauration rapide, on peut distinguer entre les produits dans lesquels un produit alimentaire tel que de la viande, des légumes et des assaisonnements divers sont présentés entre deux tranches ou deux moitiés d'un petit pain,ces tranches ou demi-pains étant plus ou moins épais, et les produits comprenant un réceptacle en un produit ingérable, en général une pâte panifiée et cuite, réceptacle dans lequel on dispose les aliments.

La présente invention concerne plus spécialement ce deuxième type de produits et plus précisément le réceptacle ingérable.

On a déjà proposé dans US-A-3.290.154 ou dans FR-A-2.516.353 (WO-A-83.01726) des récipients de ce type mais qui sont formés par une pâte levée cuite en moule sous forme d'un gobelet à paroi épaisse. Ces récipients peuvent recevoir au moment de la vente une garniture contenant une assez forte proportion de liquide notamment sous forme de sauce. US-A-3.290.154 propose de réaliser un gobelet ayant une hauteur de paroi relativement grande par rapport à son diamètre, la paroi étant constituée par une mie relativement souple entre deux surfaces constituées par une croûte. Pour ce faire, une masse de pâte est placée dans la cavité entre les parois délimitant le fond du moule et on fait lever la pâte qui envahit la cavité annulaire qui constitue la paroi. Les caractéristiques gustatives de ce réceptacle à parois épaisses sont mauvaises et il est très difficile, en raison de sa forme, de le manger surtout lorsqu'il est rempli d'un aliment plus ou moins liquide. FR-A-2.516.353 concerne un récipient du même type ayant sensiblement la même forme et présentant les mêmes inconvénients.

On connaît aussi des procédés et des moules pour fabriquer un petit pain très connu aux Etats-Unis d'Amérique sous le nom de "bun".Ces petits pains ronds, utilisés par exemple coupés en deux pour recevoir une galette de viande hâchée, ne se prêtent pas à recevoir des aliments comportant une forte proportion liquide, du fait qu'ils ne présentent pas de creux récepteur et n'ont pas de couche étanche.

Pour pallier ces inconvénients, on a proposé (voir US-A-2.222.112) d'utiliser un moule présentant un noyau creux pour former un évidement dans le "bun" et d'introduire de la chaleur dans ce noyau creux pour cuire le "bun". Eventuellement, deux noyaux peuvent être disposés côte à côte et le "bun" est alors en deux moitiés reliées par une charnière. Compte tenu de la consistance habituelle des "buns", l'ensemble n'est pas imperméable et sa forme n'est pas facile à ingérer. Surtout, le procédé de fabrication est compliqué et non automatisable, du fait qu'il faut prévoir d'entourer chaque noyau de pâte.

On a proposé (US-A-3.908.022) de donner au "bun" une forme allongée en utilisant un moule à double paroi. Le produit ainsi préparé présente les mêmes inconvénients que celui de US-A-3.290.154. Le procédé de fabrication est difficilement mis en oeuvre à l'échelle industrielle et l'obtention d'une crôute étanche par le moule intérieur surchauffé est illusoire.

Un autre procédé connu (US-A-4.065.581) utilise des moules creux allongés entourés d'une rainure et la pâte est déposée sur le moule et s'écoule jusqu'à la rainure. Ce procédé ne peut s'appliquer qu'à une fabrication artisanale et le mode de cuisson n'est pas indiqué.

On connaît par ailleurs (GB-A-109.990) un procédé de fabrication de biscuits consistant à découper une abaisse de pâte au moyen d'un couteau rectangulaire comportant des divisions discontinues formant des amorces de rupture, afin d'éviter une rupture ultérieure des biscuits. Ce procédé ne permet pas la fabrication de barquettes creuses.

La présente invention a pour but de remédier à ces inconvénients en fournissant un récipient en forme de barquette, ayant une épaisseur moindre et une forme gui en rend la consommation plus facile, avec une bonne étanchéité gui lui permet de retenir les sauces et autres liquides accompagnant les aliments, et gui puisse être obtenu aisément et de manière reproductible à l'échelle industrielle.

Ce but est atteint, conformément à l'invention, par un procédé de fabrication de barquettes ingérables pour la présentation d'aliments dans lequel on prépare une pâte panifiable à base de farine, sel et eau, avec un levain, on laisse lever la pâte, et on utilise pour la cuisson une plaque moule présentant des reliefs en saillie correspondant chacun à la forme intérieure d'une barquette, caractérisé en ce que la masse de pâte levée est laminée sous forme d'une abaisse ayant une épaisseur d'environ cinq millimètres, on place cette abaisse sur ladite plaque moule, on découpe, pour l'éliminer, la couche de pâte se trouvant entre les bords des reliefs, on soumet les morceaux de pâte sur la plaque à une fermentation régulée, puis on dépose la plaque portant les barquettes dans un four de cuisson.

Les barquettes ainsi obtenues présentent une épaisseur à l'état cuit de huit à dix millimètres, une croûte extérieure très régulière de couleur jaune paille, brillante, rigide, d'aspect croustillant et très appétissant. La surface intérieure est constituée par une croûte d'aspect brillant, d'apparence laquée et présentant une très bonne imperméabilité évitant l'imprégnation de la pâte constituant la barquette par les sauces et autres phases liquides.

La différence essentielle de l'invention par rapport aux procédés connus réside en ce qu'on dépose, sur une plaque munie de reliefs pour plusieurs barquettes, une pâte laminée continue occupant toute la surface de la plaque, on élimine ensuite les portions de pâte entre les reliefs, on soumet les morceaux de pâte à une fermentation régulée, et on dépose les morceaux de pâte, toujours sur la plaque, dans un four de cuisson. On conçoit qu'un tel procédé soit facilement automatisable et permet d'obtenir des résultats répétitifs.

Selon une autre caractéristique du procédé de l'invention et pour accroître encore l'imperméabilité de la croûte intérieure, on lubrifie la surface du moule avant mise en place de l'abaisse de pâte.

La structure de la mie est très homogène et fine en assurant une très bonne isothermie pour les garnitures chaudes.

Selon une autre caractéristique, le relief en saillie correspondant à une barquette est subdivisé par une ou plusieurs saignées transversales de façon à obtenir une barquette subdivisée en une pluralité de compartiments par les cloisons réalisées dans lesdites saignées.

Selon une variante, on forme dans l'abaisse des groupes de barquettes séparées les unes des autres par une paroi d'abaisse amincie afin de former des amorces de rupture après cuisson.

Dans ce cas, avantageusement, les parois amincies sont formées par l'outil de découpe séparant chaque groupe de barquettes.

L'invention a également pour objet les barquettes ingérables obtenues par ce procédé.

L'invention sera décrite plus en détail ci-après sous forme d'exemples de réalisation avec référence aux dessins ci-annexés dans lesquels :

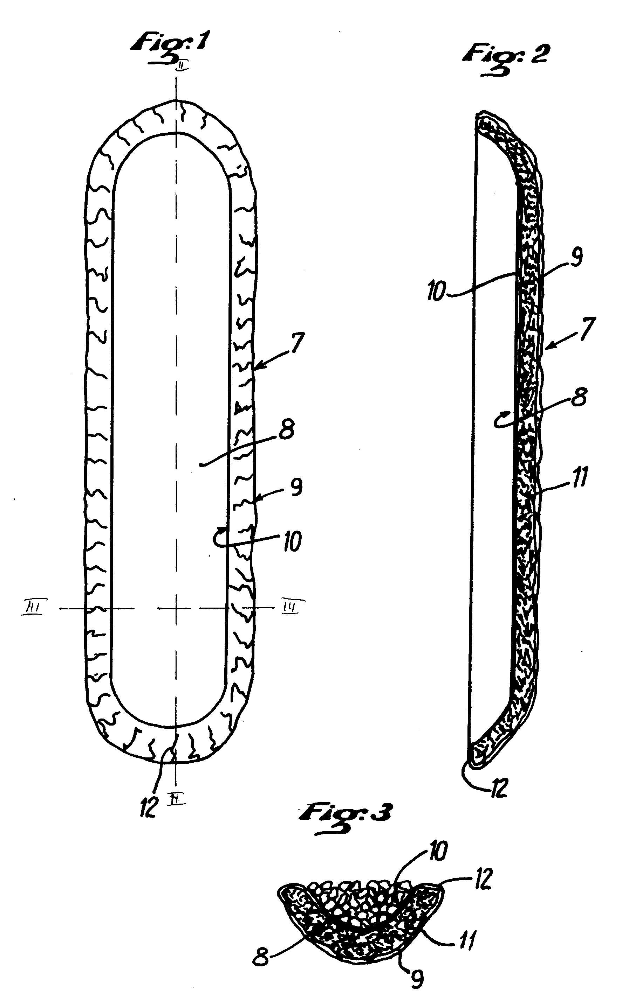

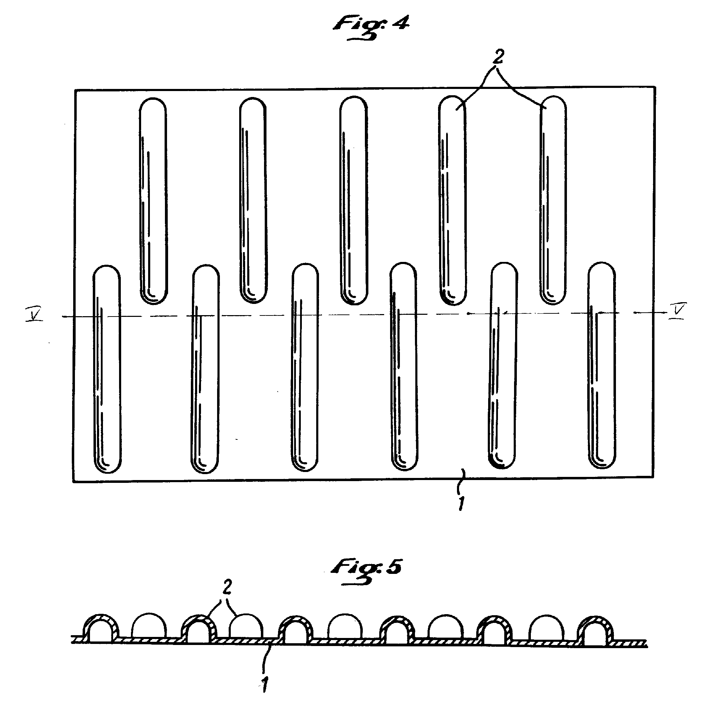

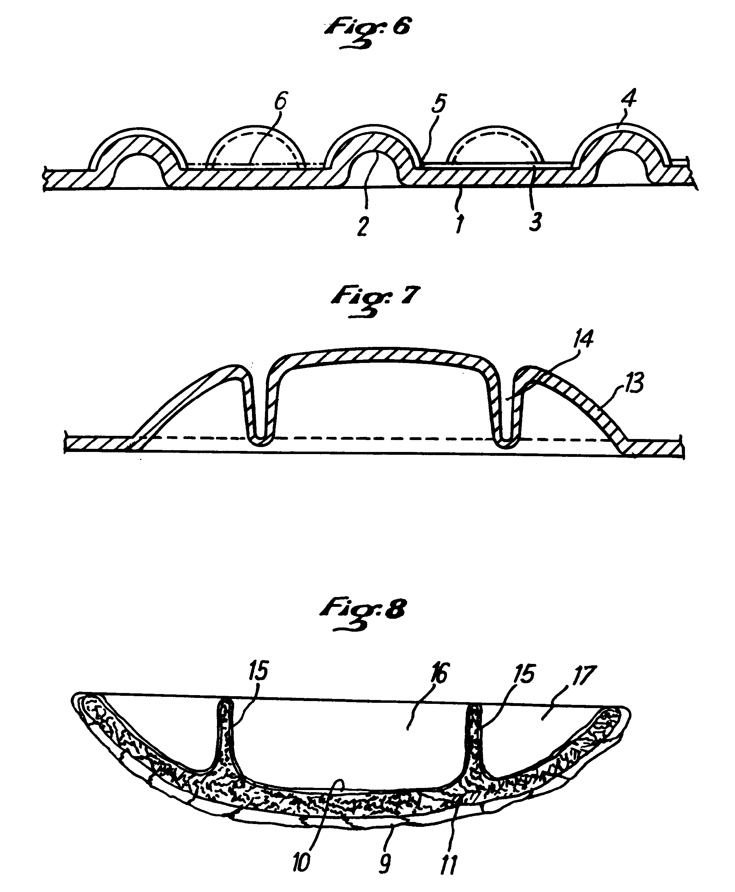

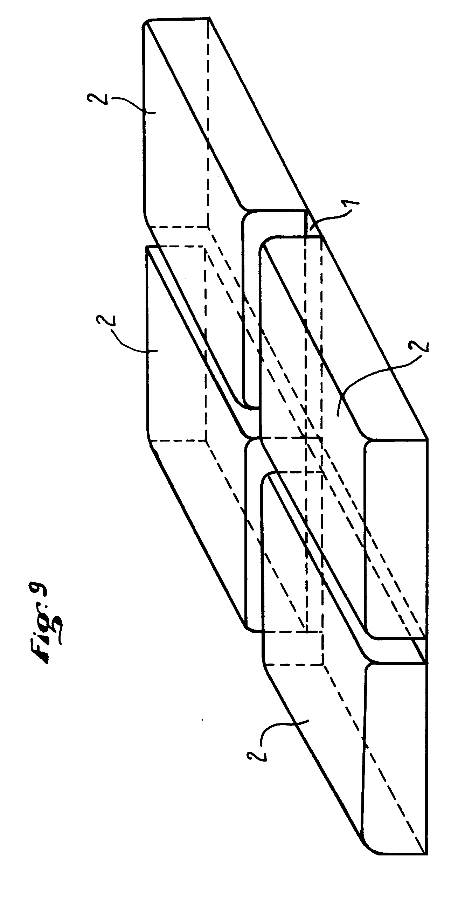

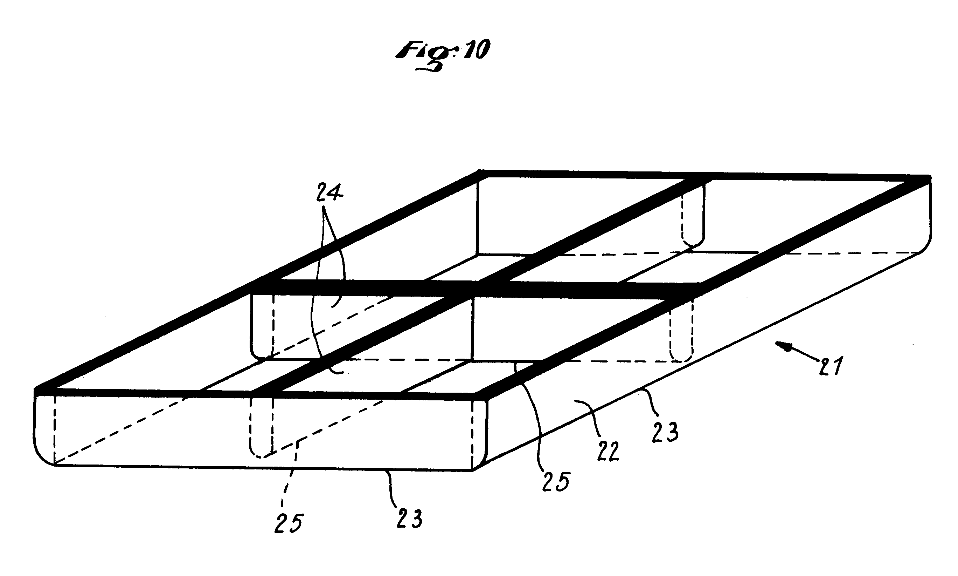

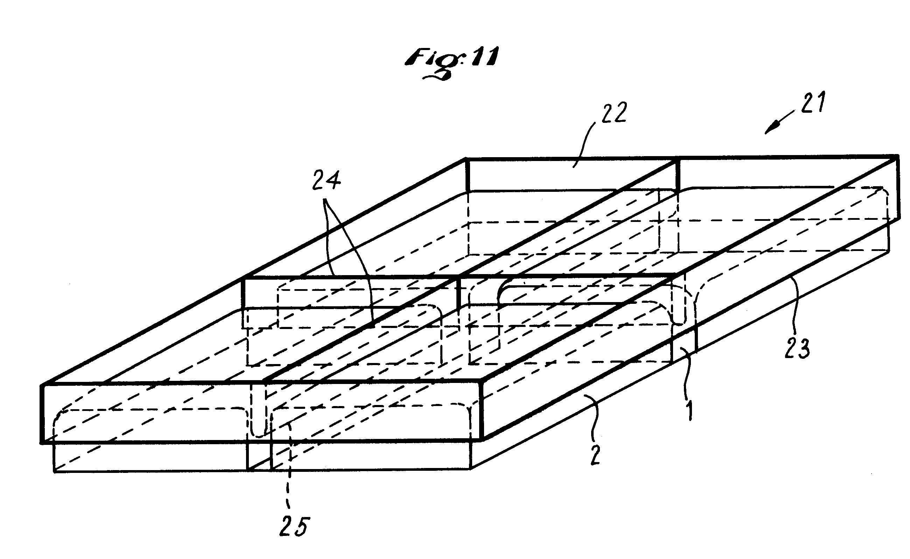

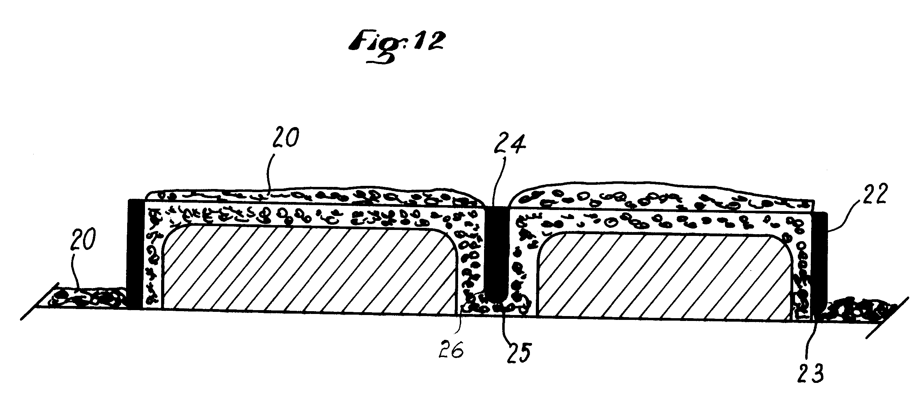

la figure 1 est une vue de dessus d'une barquette à un seul compartiment ; la figure 2 est une vue en coupe de la barquette par II-II de figure 1 ; la figure 3 est une vue en coupe par III-III de figure 1 de la barquette remplie ; la figure 4 est une vue de détail en plan du moule utilisé pour fabriquer la barquette des figures 1 à 3,la figure 5 est une vue en coupe par V-V de figure 4, la figure 6 est une vue en coupe de détail illustrant un stade de la fabrication des barquettes par le procédé de l'invention ; la figure 7 est une vue en coupe longitudinale au droit d'un relief d'une plaque moule pour la fabrication d'une barquette à trois compartiments ; la figure 8 est une vue en coupe longitudinale de la barquette fabriquée avec le moule de figure 7 ; la figure 9 est une vue en perspective d'une partie d'un moule pour la fabrication de groupes de barquettes selon une variante de l'invention ; la figure 10 est une vue en perspective d'un outil de découpe coopérant avec le moule de la figure 9 ; la figure 11 est une vue schématique en perspective de l'outil de la figure 10 monté sur le moule de la figure 9, la pâte n'ayant pas été représentée ; et la figure 12 est une vue en coupe transversale de l'ensemble de la figure 11, la pâte étant représentée.

Conformément à l'invention, on prépare une pâte panifiable du type pâte à pain à base de farine, d'eau, de sel et d'un levain. Eventuellement on peut également mettre en oeuvre une pâte du type connu pour la fabrication de pains spéciaux contenant du lard, des oignons, des farines de céréales diverses, etc. ou une pâte du type brioché.

Le levain est fabriqué dans les conditions suivantes :
- on utilise au départ une souche de champignons microscopiques de l'espèce saccharomycae cerevisae (levure boulangère)
- on effectue une réactivation cellulaire de cette levure par incorporation de la levure dans un milieu nutritif ayant sensiblement la formule :
   - Eau :: 84 %
   - glucides: 15 %
   - sels minéraux :: 1 %
   - vitamines :: 100 p.p.m.
- on mélange intimement la levure avec le milieu nutritif en maintenant une agitation douce, sous une température constante d'environ 28° C, en mesurant et régulant les facteurs physiques tels que durée de mélange, pH, oxygénation, etc.

Un gramme de levure boulangère renferme environ 10 milliards de cellules vivantes.

La mise en contact avec un milieu liquide très riche en hydrate de carbone et en éléments indispensables à la croissance permet de réactiver les cellules levuriennes et de les placer en phase exponentielle de croissance, c'est-à-dire qu'il y a multiplication du nombre de cellules. Cela répond au principe même de la multiplication bactérienne et fait appel à des procédés biotechnologiques.

Placée dans des conditions optimales, la population levurienne double en 96 minutes.

L'intérêt de cette technique est donné par le fait que les levures sont directement "opérantes" lorsqu'on les incorpore à la pâte.

Les temps de latence (adaptation au milieu) sont réduits, voire pratiquement supprimés, d'où un gain de temps appréciable.

On fabrique ensuite la pâte dans un pétrin avec ensemencement par la culture fermentaire, en contrôlant le temps de contact entre la pâte et le ferment. On lamine ensuite la pâte sous forme d'une abaisse d'environ 5mm d'épaisseur.

On utilise alors un moule tel que représenté aux figures 4 à 6 ou 9, 12 constitué par une tôle 1 comportant sur sa face supérieure des reliefs 2 correspondant à la forme de l'alvéole à obtenir dans la barquette constituant le récipient conforme à l'invention.

L'abaisse 3 (fig. 6) est appliquée sur le moule pour recouvrir en 4 les reliefs qui peuvent être réalisés par des emboutis de la tôle 1. L'abaisse est découpée en 5 le long de la périphérie des reliefs et la partie 6 de l'abaisse située entre les reliefs est retirée pour être réincorporée dans la masse de pâte d'une autre abaisse.

On soumet alors les morceaux de pâte 4 qui se trouvent sur les reliefs 2 de la plaque 1 à une fermentation régulée.

Au début de la fermentation et de la cuisson, on nébulise une solution de formule variable (eau seulement ; eau + additif ; huile ; huile + aromates, etc.). L'intérêt de cette technique est démontré pour au moins trois points.

L'eau a un effet humidifiant sur la pâte ; par conséquent, on évite la formation du croutage (formation d'une fine pellicule à la surface de la barquette, action sur la coloration en cuisson), car on veut obtenir une couleur jaune paille brillante (semblable à celle de la baguette française).

On améliore aussi l'imperméabilité de la pâte à la vapeur d'eau, le produit se dessèche moins facilement en cuisson. L'évaporation est limitée, l'eau a tendance à rester dans le produit. On obtient ainsi une mie plus souple et moelleuse.

Si on applique une nébulisation d'une matière grasse par exemple, celle-ci peut être le vecteur d'une aromatisation (bacon, fromage, épices diverses etc.).

On peut aussi par ce procédé envisager de "peindre" ou colorer la barquette. (Marquage d'un logo, d'une marque etc.).

En résumé, cette nébulisation peut être le vecteur :
- d'amélioration physique du produit (rétention d'eau, moellosité, etc.)
- d'amélioration sanitaire (conservation du produit au vieillissement)
- d'amélioration gustative (aromatisation, etc.)
- d'amélioration visuelle (coloration, marquage, etc.).

Les barquettes sont ensuite cuites en mettant les plaques 1 portant les ébauches de barquettes dans un four à sole fixe ou autre. La cuisson terminée, les barquettes 7 en pâte ainsi formées sont décollées du moule.

Dans le cas d'une fabrication à l'échelle industrielle, le procédé peut être automatisé, la mise en place de l'abaisse, le découpage de celle-ci et l'éjection de la pâte entre les empreintes, étant effectués par des dispositifs automatiques. La cuisson est alors effectuée de préférence sur un tapis métallique avec des empreintes au format des barquettes, ledit tapis circulant dans un four tunnel.

Les barquettes 7 présentent une cavité centrale 8 dont le volume est au moins égal au volume du pain constituant la paroi de la barquette. Ladite barquette présente une croûte extérieure très régulière, de couleur jaune paille, brillante, rigide, d'aspect croustillant et appétissant. La croûte intérieure 10 est lisse, d'aspect brillant et d'apparence laquée. La mie 11 est fine et régulière. Les bords 12 sont plus ou moins réguliers.

La préhension de la barquette entre le pouce, l'index et le majeur est très facile et, du fait de sa largeur, l'introduction dans la bouche s'effectue parfaitement, ce qui assure une grande propreté de consommation.

Comme illustré à la figure 7, le relief 13 définissant la forme intérieure de la barquette peut comporter des saignées transversales 14. Dans un tel cas la pâte de l'abaisse qui va pénétrer dans les saignées 14 va donner naissance à des cloisons transversales 15 en subdivisant la cavité de la barquette en un compartiment central 16 et deux compartiments d'extrémité 17. Ces trois compartiments peuvent être garnis avec des produits différents tels qu'une garniture formant entrée dans l'un des compartiments 17, une garniture assurant les fonctions de plat de résistance dans le compartiment 16 et une garniture formant dessert dans l'autre compartiment 17.

Dans la variante des figures 9 à 12, la plaque 1 porte une pluralité de groupes de quatre reliefs 2, un seul groupe étant représenté. Lorsque la couche de pâte 20 a été déposée sur la plaque 1, on abaisse sur la plaque un outil de coupe dont une portion correspondant à un groupe de reliefs 2 est représentée à la figure 10. L'outil de coupe 21 est constitué d'un cadre 22 dont les arêtes inférieures 23 découpent la pâte 20 autour du groupe de reliefs 2. Le cadre 22 comporte un croisillon 24 formé de médianes du cadre 22 et dont les arêtes inférieures 25 sont décalées vers l'intérieur par rapport aux arêtes de coupe 23.

Lorsque l'outil 21 est abaissé sur la plaque 1 (figures 11 et 12), les arêtes inférieures 25 du croisillon 24 forment dans la pâte 20 des cloisons 26 (figure 12) d'épaisseur réduite qui, après le passage de la plaque 1 dans le four de cuisson, formeront des amorces de rupture pour séparer les quatre barquettes correspondant aux quatre reliefs 2. Ces barquettes peuvent préalablement être remplies de divers aliments constituant un repas complet ou d'un seul aliment, tel qu'une garniture de pizza ou de quiche, pour former des portions qui seront séparées au moment de la consommation.

Bien entendu, le nombre de reliefs dans un groupe peut être différent de quatre.

La pâte préparée selon le procédé de l'invention se prête particulièrement bien à une surgélation, à l'état partiellement cuit ou totalement cuit. La pâte peut être réchauffée, seule ou avec sa garniture, dans un four à micro-ondes et retrouve sa souplesse ainsi que le croquant de sa croûte.

## Revendications

1. Procédé de fabrication de barquettes ingérables pour la présentation d'aliments dans lequel on prépare une pâte panifiable à base de farine, sel et eau, avec un levain, on laisse lever la pâte, et on utilise pour la cuisson une plaque moule présentant des reliefs en saillie correspondant chacun à la forme intérieure d'une barquette, caractérisé en ce que la masse de pâte levée est laminée sous forme d'une abaisse ayant une épaisseur d'environ cinq millimètres, on place cette abaisse sur ladite plaque moule, on découpe,pour l'éliminer, la couche de pâte se trouvant entre les bords des reliefs, on soumet les morceaux de pâte sur la plaque à une fermentation régulée, puis on dépose la plaque portant les barquettes dans un four de cuisson.

2. Procédé de fabrication selon la revendication 1, caractérisé en ce que le levain est fabriqué dans les conditions suivantes :
- on utilise au départ une souche de champignons microscopiques de l'espèce saccharomycae cerevisae (levure boulangère)
- on effectue une réactivation cellulaire de cette levure par incorporation de la levure dans un milieu nutritif ayant sensiblement la formule :
Eau : 84 %
glucides : 15 %
sels minéraux : 1 %
vitamines : 100 p.p.m.
- on mélange intimement la levure avec le milieu nutritif en maintenant une agitation douce, sous une température constante d'environ 28° C, en mesurant et régulant les facteurs physiques tels que durée de mélange, pH, oxygénation, etc.

3. Procédé de fabrication selon l'une des revendications 1 et 2,
caractérisé en ce que, pour accroître l'imperméabilité de la croûte intérieure, on lubrifie la surface du moule avant mise en place de l'abaisse de pâte.

4. Procédé de fabrication selon l'une des revendications 1 à 3,
caractérisé en ce que, au début de la fermentation et de la cuisson, on nébulise sur la pâte une solution constituée d'eau plus un additif, d'huile, d'huile plus d'aromates, etc.

5. Procédé de fabrication selon l'une quelconque des revendications 1 à 4,
caractérisé en ce que le relief en saillie correspondant à une barquette est subdivisé par une ou plusieurs saignées transversales de façon à obtenir une barquette subdivisée en une pluralité de compartiments par les cloisons réalisées dans lesdites saignées.

6. Procédé de fabrication selon l'une des revendications 1 à 4,
caractérisé en ce qu'on forme dans l'abaisse des groupes de barquettes séparées les unes des autres par une paroi d'abaisse amincie (26) afin de former des amorces de rupture après cuisson.

7. Procédé de fabrication selon la revendication 6,
caractérisé en ce que les parois amincies (26) sont formées par l'outil de découpe (21) séparant chaque groupe de barquettes.

8. Procédé de fabrication selon l'une des revendications 1 à 7,
caractérisé en ce que la cuisson est effectuée dans un four à sole fixe.

9. Procédé de fabrication selon l'une des revendications 1 à 7,
caractérisé en ce que la cuisson est effectuée dans un four tunnel, les reliefs (2) étant ménagés sur un tapis métallique traversant ledit four tunnel.

10. Une barquette pour la présentation d'aliment susceptible d'être obtenue par le procédé selon l'une des revendications 1 à 9.

## Patentansprüche

1. Herstellungsverfahren von eßbaren Schälchen zur Nahrungsmittelpräsentation, in dem man einen Brotgetreideteig auf der Basis von Mehl, Salz und Wasser mit einem Hefeteig herstellt man den Teig aufgehen läßt und für das Backen eine Formplatte verwendet, die vorspringende Reliefs aufweist, die jedes der inneren Form eines Löffelbiskuits entsprechen, dadurch gekennzeichnet, daß die Masse des aufgegangenen Teigs in Form einer Platte mit einer Dicke von ungefähr fünf Millimetern ausgerollt wird, man diese Teigplatte auf die Formplatte setzt, man die Teigschicht, die sich zwischen den Reliefrändern befindet ausschneidet, um sie wegzunehmen, man die Teigstücke auf der Platte einer geregelten Gärung unterzieht und man dann die Platte mit den Schälchen in einen Backhofen setzt.

2. Herstellungsverfahren nach Anspruch 1, dadurch gekennzeichnet, daß der Hefeteig unter den folgenden Bedingungen hergestellt wird:
- man verwendet zu Beginn einen Stamm mikroskopischer Pilze der Art saccharomycae cerevisae (Bäckerhefe)
- man führt eine Zellreaktivierung dieser Hefe durch, indem die Hefe in ein Nährstoffmilieu eingebettet wird, das praktisch die folgende Zusammensetzung aufweist :
Wasser: 84 %
Zucker: 15 %
Mineralsalze: 1 %
Vitamine: 100 p.p.m.
- man vermischt die Hefe gründlich mit dem Nährstoffmilieu unter stetigem sanften Rühren bei einer konstanten Temperatur von ca. 28°C, wobei die physikalischen Faktoren wie Mischdauer, pH, Sauerstoffanlagerung etc. gemessen und geregelt werden.

3. Herstellungsverfahren nach einem der Ansprüche 1 und 2, dadurch gekennzeichnet, daß man, um die Undurchlässigkeit der inneren Kruste zu erhöhen, die Oberfläche der Form vor dem Einsetzen der Teigplatte einfettet.

4. Herstellungsverfahren nach einem der Ansprüche 1 bis 3, dadurch gekennzeichnet, daß man zu Beginn der Gärung und des Backens auf dem Teig eine Lösung aus Wasser mit einem Zusatz, aus Öl, aus Öl mit Aromaten, etc. versprüht.

5. Herstellungsverfahren nach irgendeinem der Ansprüche 1 bis 4, dadurch gekennzeichnet, daß das vorspringende Relief, das einem Schälchen entspricht, durch einen oder mehrere Quereinschnitte derart unterteilt ist, daß man ein Schälchen erhält, das durch die Trennwände in den Einschnitten in eine Vielzahl von Abteilungen unterteilt ist.

6. Herstellungsverfahren nach einem der Ansprüche 1 bis 4, dadurch gekennzeichnet, daß man in der Teigplatte voneinander durch eine abgeschrägte Teigplattenwand (26) getrennte Schälchengruppen bildet, um nach dem Backen Bruchstücke zu bilden.

7. Herstellungsverfahren nach Anspruch 6, dadurch gekennzeichnet, daß die abgeschrägten Wände (26) durch das Schneidewerkzeug (21), das jede Schälchengruppe trennt, gebildet werden.

8. Herstellungsverfahren nach einem der Ansprüche 1 bis 7, dadurch gekennzeichnet, daß das Backen in einem festen Herdofen durchgeführt wird.

9. Herstellungsverfahren nach einem der Ansprüche 1 bis 7, dadurch gekennzeichnet, daß das Backen in einem Tunnelofen durchgeführt wird, wobei die Reliefs (2) auf einem Metallblech, das den Tunnelofen durchläuft, angeordnet sind.

10. Ein Schälchen zur Nahrungsmittelpräsentation, das man durch das Verfahren nach den Ansprüchen 1 bis 9 erhält.

## Claims

1. Method for producing ingestible boat-shaped pastries for the presentation of food, according to which a bread-making dough based on flour, salt and water, with a leaven, is prepared, the dough is left to rise and, for baking purposes, a mould plate is employed which exhibits projecting relief forms, each corresponding to the internal shape of a boat, characterised in that the body of risen dough is laminated in the form of rolled-out dough having a thickness of approximately five millimetres, this rolled-out dough is placed on the said mould plate, the layer of dough between the edges of the relief forms is cut off and removed, the pieces of dough on the plate are subjected to controlled fermentation, and then the plate bearing the boat-shaped pastries is placed in an oven.

2. Production method according to Claim 1, characterised in that the leaven is made as follows:
- at the start a strain of microscopic fungus of the saccharomycae cerevisae (bread-making yeast) species is used
- a cellular reactivation of this yeast is carried out by incorporating the yeast into a nutritional environment which has approximately the following formula:
Water: 84%
Glucides: 15%
Mineral salts: 1%
Vitamins: 100 ppm
- the yeast is mixed intimately into the nutritional environment by maintaining a gentle stirring, at a constant temperature of approximately 28°C, whilst measuring and controlling the physical factors such as mixing time, pH, oxygenation, etc.

3. Production method according to one of Claims 1 and 2, characterised in that, in order to increase the impermeability of the inner crust, the surface of the mould is lubricated before the rolled-out dough is put in place.

4. Production method according to one of Claims 1 to 3, characterised in that, at the start of fermentation and baking, a solution consisting of water plus an additive, oil, oil plus herbs, etc, is sprayed onto the dough.

5. Production method according to any one of Claims 1 to 4, characterised in that the projecting relief form corresponding to a boat shape is subdivided by one or more transverse grooves in such as way as to obtain a boat shape subdivided into a plurality of compartments by the partitions produced in the said grooves.

6. Production method according to one of Claims 1 to 4, characterised in that groups of boat shapes separated from one another by a thin wall of rolled-out dough (26) are formed in the rolled-out dough, in order to form breaking points after baking.

7. Production method according to Claim 6, characterised in that the thin walls (26) are formed by the cutting tool (21) separating each group of boat-shaped pastries.

8. Production method according to one of Claims 1 to 7, characterised in that baking is undertaken in a fixed-hearth oven.

9. Production method according to one of Claims 1 to 7, characterised in that baking is undertaken in a tunnel oven, the reliefs (2) being arranged on a metal conveyor passing through the said tunnel oven.

10. A boat-shaped pastry for the presentation of food able to be obtained by the method according to one of Claims 1 to 9.
